# EUROPÄISCHE PATENTANMELDUNG

(11) **EP 4 205 830 A1**
(43) Veröffentlichungstag der Anmeldung: **05.07.2023**
(21) Anmeldenummer: 21000369.5
(22) Anmeldetag: 30.12.2021
(51) Int. Cl.: B01D 47/06, B03C 3/00

(54) **TECHNOLOGISCHES SYSTEM ZUR ELIMINIERUNG VON FREISCHWEBENDEN AEROSOLEN IN DER UMGEBUNGSLUFT GESCHLOSSENER RÄUME**

(71) Anmelder: Clemens S. Martin, 80799 München (DE)
(72) Erfinder: Clemens S. Martin, 80799 München (DE)

(57) **Zusammenfassung**

Bei der erfindungsgemäßen Technologie mit dem Arbeitstitel "Fogster" handelt es sich um die Kombination von High-Tech Flüssigkeitsvernebler Modulen mit digital vernetzten Aerosol- oder CO2 Sensoren. Diese Sensoren messen die aktuelle Aerosol Dichte oder die Atemluftbelastung in der Umgebungsluft geschlossener Räume, um die Anlagen jeweils dann zu aktivieren, wenn vorbestimmbare Grenzwerte von Aerosolen (ein heterogenes Gemisch aus festen oder flüssigen Schwebeteilchen in einem Gas) oder einer vorbestimmbaren CO2 Belastung erreicht werden. Die Anwendungsmöglichkeiten betreffen dabei grundsätzlich Viren-Aerosole ebenso wie Bakterien-Aerosole und Feinstaub-Aerosole.

Die erfindungsgemäßen Anlagen versprühen, nach Aktivierung durch die Sensoren, einen ultrafeinen Wassernebel (sog. "Nano-Droplets"), der sich in dem gesamten betroffenen Raum schnell ausbreitet und zum Beispiel freischwebende Covid-Aerosole in diesem Raum sofort an einzelne der winzigen Droplets des Wassernebels bindet. Optional kann dem Wasser in dem Vernebelungsmodul zum Beipiel NatriumChlorid (Kochsalzlösung) in kleinsten Mengen beigemischt werden. Alternativ kann auch Natrium HypoChlorid oder eine Ozonlösung oder andere Elemente beigemischt werden. Ein ultrafeiner Wassernebel, der auch Spuren von NatriumChlorid oder eine andere Spurenelemente enthält, kann zum Beispiel das Virus in den Aerosolen bei Kontakt abtöten. Derselbe Effekt kann zum Beispiel auch bei Bakterien-Aerosolen mithilfe anderer Elemente erreicht werden.

Ein geschlossener Raum im Sinne des vorliegenden Textes ist jeder Raum, der für den Aufenthalt von Personen vorgesehen ist, also beispielsweise ein Klassenzimmer, ein Restaurant oder ein Büro, aber auch ein Theater, ein Konzertsaal oder eine Halle für Sport- und Kulturgroßveranstaltungen. Ein geschlossener Raum im Sinne des vorliegenden Textes bezieht sich auch Räume, die für Tierhaltung vorgesehen sind, wie beispielsweise Stallungen, und auf alle "mobilen Räume", wie beispielsweise Busse, Flugzeuge, Züge oder Schiffe.

## Beschreibung

Die vorliegende Erfindung betrifft das technische Gebiet der Luftreinhaltung, speziell der Reinigung der Umgebungsluft in geschlossenen Räumen von Viren, Bakterien und Feinstaub in Form von Aerosolen, ein heterogenes Gemisch (Dispersion) aus festen oder flüssigen Schwebeteilchen in einem Gas, in Verbindung mit dem technischen Gebiet der Wasservernebelung.

Bei der neuen Technologie mit dem Arbeitstitel "Fogster" handelt es um die Kombination von entsprechend adaptierten High-Tech Flüssigkeitsvernebler Modulen, wie sie bislang vorwiegend zur Brandbekämpfung in hochsensiblen Umgebungen (Museen, Reinsträume, etc.) eingesetzt wurden, mit digital vernetzten Aerosol Sensoren. Diese Sensoren messen die aktuelle Aerosoldichte in der Umgebungsluft, um die Anlagen jeweils dann zu aktivieren, wenn vorbestimmbare Grenzwerte in der Umgebungsluft der betroffenen Räume erreicht werden. Alternativ können auch CO2 Sensoren eingesetzt werden, über die eine vorbestimmbare Belastung der Umgebungsluft von Atemluft ebenfalls nachgewiesen werden kann.

Ein geschlossener Raum im Sinne des vorliegenden Textes ist jeder Raum der für den Aufenthalt von Personen vorgesehen ist und zwar unabhängig von der Größe des Raumes und von der jeweils vorgesehenen oder üblichen Aufenthaltsdauer, also beispielsweise ein Restaurant oder ein Büro oder ein Klassenzimmer, aber auch eine Konzerthalle oder ein Fitness Center. Ein geschlossener Raum im Sinne des vorliegenden Textes bezieht sich nicht nur auf stationäre Räume, sondern auch auf alle "mobilen Räume", wie beispielsweise Busse, Flugzeuge, Züge oder Schiffe, ebenfalls unabhängig von deren Größe. Ein geschlossener Raum im Sinne des vorliegenden Textes bezieht sich auch auf landwirtschaftliche Stallungen und Tunnelbahnhöfe für Schienenfahrzeuge, einschließlich der zuführenden Tunnelanlagen. Bei Wasserverneblung im Sinne dieses Textes handelt es sich um Wassernebel-Systeme bei denen Wasser mikrofein vernebelt wird und damit winzige sogenannte "Nano-Droplets" erzeugt werden können. Die zu vernebelnde Flüssigkeit ist dabei vorzugsweise Wasser. Es können jedoch anstelle von Wasser auch beliebige andere geeignete Flüssigkeiten oder Gemische von Flüssigkeiten zwecks Vernebelung zum Einsatz gebracht werden. Diese Wassernebel-Anlagen können in vielfältigen unterschiedlichen Ausführungen jeweils den räumlichen Gegebenheiten bedarfsgerecht angepasst werden. Der genannte Flüssigkeitsvernebler kann dabei beispielsweise eine Einrichtung sein, bei der die Flüssigkeit unter hohem Druck durch Düsen gepresst und auf diese Weise vernebelt wird und/oder mittels Ultraschalls vernebelt wird und/oder mittels thermischer Einflussnahme vernebelt wird und/oder mittels chemischer Einflussnahme vernebelt wird. Jedoch ist die Ausgestaltung des Flüssigkeitsverneblers nicht auf diese eben genannten Flüssigkeitsvernebelungsmöglichkeiten beschränkt. Der Flüssigkeitsvernebler in allen möglichen Ausführungsbeispielen kann auf irgendeiner beliebigen sich dem Fachmann erschließenden oder dem Fachmann bereits bekannten Technologie zur Flüssigkeitsvernebelung basieren.

Werden Düsen zur Zerstäubung des Wassers eingesetzt, dann können spezielle Düsen dafür sorgen, dass das Sprühbild bzw. der Sprühwinkel, der Volumenstrom und die Dropletgröße anwendungsspezifisch variiert werden können. Optional können die Wassernebel-Anlagen digital mit handelsüblichen Aerosol Sensoren verbunden werden, mit denen die aktuelle Aerosol Dichte in der Umgebungsluft gemessen wird, um die Anlagen jeweils dann zu aktivieren, wenn vorbestimmbare Grenzwerte in den betroffenen Räumen erreicht werden.

### Funktionalität der Erfindung:

Prof. Dr. Thomas Zeuch, Leiter des Instituts für physikalische Chemie der Georg-August-Universität Göttingen, konnte inzwischen in diversen wissenschaftlichen Versuchsreihen im Auftrag des Erfinders nachweisen, dass sich freischwebende Aerosole erfindungsgemäß durch einzelne Droplets eines sehr feinen Wassernebels ("Nano-Droplets") binden lassen und damit umgehend zum "Absturz" gebracht werden können, was im Resultat die Viren- und Bakterien-Aerosole bereits unschädlich macht.

Optional kann dem Wasser in dem Vernebelungsmodul auch NatriumChlorid (Kochsalzlösung), oder NatriumHypoChlorid oder Ozon oder ein anderes Element in kleinsten Mengen beigemischt werden, das für den menschlichen Körper völlig unschädlich ist. Ein Wassernebel der auch Spuren dieser Beimischungen enthält, kann das Virus bzw. die Bakterien bereits in den noch schwebenden Aerosolen abtöten, bevor diese "zum Absturz" gebracht werden.

Dieses Abtöten der ursprünglich freischwebenden Viren- oder Bakterien-Aerosole nach Bindung an die "Fogster"-Droplets mit den Beimischungen, hat folgende Ursache:

Selbst bei hoher Luftfeuchtigkeit sind Wassertröpchen mit 50 Mikrometer Durchmesser (z.B. aus den "Fogster"-Düsen) nicht stabil. Ihre Oberflächenspannung bewirkt ein mit schrumpfender Größe immer schnelleres Abdampfen von Wassermolekülen. Der Tropfen schrumpft bei 50 Mikrometer Durchmesser daher schnell auf einen Kern mit seinen schwerflüchtigen Bestandteilen, wie zum Beispiel NatriumChlorid und das Virus. Reduziert sich der Tröpfchenradius um den Faktor 10, z.B. von 50 auf 5 Mikrometer, erhöht sich die Konzentration der schwerflüchtigen Bestandteile um den Faktor 10^3 1000, da sein Volumen um den Faktor 10^3 bei gleichbleibender Masse seiner Bestandteile schrumpft (Konzentration ist Masse/Volumen oder Stoffmenge/Volumen). Sind Viren oder Bakterien im Tröpfchen gelöst, werden sie zum Beispiel einer rapide hochschnellenden Konzentration von NatriumChlorid ausgesetzt und mit sehr hoher Wahrscheinlichkeit umgehend abgetötet.

Alternativ kann dem Wasser statt NatriumChlorid auch Ozon oder NatrioumHypoChlorid oder ein anderes Element in kleinsten Mengen beigemischt werden, um die oben dargestellten Effekte zu erzielen.

### Hintergrund der Erfindung:

Hintergrund der Erfindung war zunächst die Abwehr und Eindämmung der Corona Pandemie. Seit ca. April 2020 wurde bei Neuinfektionen festgestellt, dass ein großer Teil der Ansteckungen mit dem neuartigen Covid-19 Virus auch durch Covid Aerosole erfolgt, die beim Sprechen oder Singen entstehen und sich anschließend freischwebend in der Luft ausbreiten, auch über erheblich größere Distanzen als die damals üblicherweise empfohlenen 1,50 Meter bis 2 Meter Abstände.

Dies hatte z.B. zur Folge, dass in einem Restaurant in den USA nachweislich ein einziger Covid Infizierter ohne Symptome innerhalb von ca einer Stunde fast 70% der anderen Gäste anstecken konnte, obwohl alle Gäste die dort vorgeschriebenen zwei Meter Abstandsregelung zwischen den Tischen eingehalten hatten. Ähnliches wurde auch in einem Großraumbüro und bei einer Chorprobe in einer Kirche nachgewiesen, obwohl alle Hygienemaßnahmen eingehalten wurden.

Ursache war in allen Fällen, dass sich die freischwebenden Covid Aerosole im Laufe von wenigen Minuten in dem gesamten Raum ausbreiten konnten.

Inzwischen wurde diese, ursprünglich nicht erwartete Verbreitung der Covid Viren als Aerosole, auch von namhaften wissenschaftlichen Experten in entsprechenden Versuchsreihen bestätigt. Naheliegend wurde als Vorbeugung eine häufige Lüftung der Räume bzw. generell zum Beispiel eine Gastronomie im Freien empfohlen, soweit das möglich ist.

Welchen Stellenwert die Verbreitung von Covid Viren über Aerosole inzwischen gewonnen hat, wird auch durch aktuelle wissenschaftliche Großversuche zur Vermeidung dieser als "hochgradig effektiv" eingestuften Ansteckungsvariante deutlich.

Der Erfindung lag ursprünglich die Aufgabe zugrunde, ein neuartiges Verfahren, eine neuartige modulare Flüssigkeitsvernebelungseinheit, sowie eine neuartige Vorrichtung zur Bindung von Aerosolen und deren dadurch bedingte Eliminierung in geschlossenen Räumen bereitzustellen, um so eine Ansteckung durch frei in der Umgebungsluft schwebenden Viren in Form von Aerosolen auszuschließen. Das schließt auch Viren ein, die durch sog. "Tröpfcheninfektion" z.B. durch Husten oder Nießen ausgestoßen werden und beschränkt sich ausdrücklich nicht auf Covid-Viren.

Inzwischen wurde das der Erfindung zugrunde liegende Verfahren auch auf eine technisch identisch gestaltete Vorrichtung zur Eliminierung von bakteriellen Aerosolen in der Umgebungsluft geschlossener Räume ausgeweitet.

In einem weiteren Anwendungsbereich kann die erfindungsgemäße Technologie auch zur nachhaltigen Reduzierung von Feinstaub in der Umgebungsluft von unterirdischen Verkehrsinfrastruktursystemen eingesetzt werden. In diesem Fall wird ausschließlich Wasser eingesetzt.

Den meisten Fahrgästen von U-Bahnen ist nicht bewusst, dass die Feinstaubbelastung in unterirdischen Tunnelbahnhöfen die gesetzlich zulässigen oberirdischen Grenzwerte oft weit überschreitet. Dies wurde kürzlich durch eine detaillierte Analyse der Universität Stuttgart bestätigt.

Jedes Schienenfahrzeug schiebt eine Luftsäule durch den Tunnel, die große Mengen aufgewirbelten Feinstaubs aus Bremsabrieb und anderen gefährlichen Materialien enthält, der dann den wartenden Fahrgästen vor der Einfahrt in den Bahnhof direkt ins Gesicht geblasen wird.

### Zielsetzung der Erfindung:

Es ist eine vorrangige Zielsetzung dieser Erfindung, die Verbreitung von Covid-Aerosolen oder von anderen Viren-Aerosolen in der Umgebungsluft von geschlossenen Räumen erheblich einzuschränken, bzw. völlig auszuschließen, zumal die aktuell als Schutzmaßnahme vorgeschriebenen Abstandsregelungen bei einem längeren Aufenthalt in geschlossenen Räumen nur wenig Wirkung zeigen, da sich freischwebende Covid-Aerosole offensichtlich sehr schnell über die gesamte Raumluft in diesen Räumen ausbreiten können und zwar unabhängig von deren Größe.

Im Ergebnis kann diese Erfindung einen erheblichen Beitrag zur Gesundheit der Bevölkerung durch einen effektiven Schutz vor Viren bieten, die sich auch oder vorwiegend über Aerosole verbreiten. Zeitgleich werden dadurch auch die durch die aktuelle Corona Pandemie stark beeinträchtigte Volkswirtschaft und kulturelle Einrichtungen unterstützt, da grundsätzlich Menschenansammlungen in geschlossenen Räumen dann wieder ohne ein erhebliches gesundheitliches Risiko stattfinden können. Das betrifft sowohl die Nutzung von Klassenzimmern und Büroflächen, als auch den Betrieb von Restaurants, von Ladengeschäften, von Kinos, von Museen, von Opernhäusern, von Theatern, die Durchführung von Sport- und Kultur-Großveranstaltungen in Hallen und viele andere Bereiche des durch die aktuelle Corona Pandemie stark eingeschränkten menschlichen Miteinanders.

Die "bakterielle Variante" der Erfindung soll insbesondere auch aber nicht ausschließlich in landwirtschaftlichen Stallungen eingesetzt werden, um bakteriell verbreitete Krankheiten insbesondere in der Massentierhaltung nachhaltig auszuschließen und auf diese Weise, die derzeit bei dieser Tierhaltung massiv eingesetzten Antibiotika in Schweine-, Rinder- und Hühnerställen erheblich zu reduzieren beziehungsweise zu ersetzen. Die daraus resultierenden gefährlichen Antibiotika-Resistenzen bei Mensch und Tier verbreiten sich zurzeit weltweit mit einer beängstigenden Dynamik.

Die "Feinstaub - Version" der FOGSTER-Technologie bietet eine schnell umsetzbare Lösung für diese ernsthafte Bedrohung der öffentlichen Gesundheit. Diese Version kombiniert ein Hightech-Wassernebelsystem mit Feinstaubsensoren und digitalen Kommunikationsmodulen. Es kann entweder an den Schienenfahrzeugen selbst oder an den Wänden der jeweiligen unterirdischen Tunnelsegmente und Bahnhöfe installiert werden.

Der Wassernebel bindet den Feinstaub sofort an den Tunnelboden und verhindert so effektiv die gefährlichen Verwirbelungen des Feinstaubs in den Luftsäulen vor den Zügen. Der feuchte Fein-staub verbleibt auf dem Tunnelboden, bis er durch die reguläre Tunnelreinigung entsorgt wird

### Fazit

Der Gegenstand der Erfindung dient zur **Eliminierung von Aerosolinfektionen** mit durch Viren und Bakterien übertragenen Krankheiten in der Umgebungsluft geschlossener Umgebungen.

Die **Landwirtschaftsversion** der Fogster-Technologie kann den weit verbreiteten Einsatz von Antibiotika bei Tieren in Massentierhaltung deutlich reduzieren und wahrscheinlich sogar ganz eliminieren.

Darüber hinaus kann die **"Fine-Dust-Version"** der erfindungsgemäßen Technologie die wiederholte Gesundheitsgefährdung von U-Bahn-Passagieren gegenüber gefährlichen Sonderstoffen in U-Bahn-Stationen von Ballungsräumen effektiv beseitigen.

## Patentansprüche

1. Verfahren zum Bewirken einer zumindest zeitweiligen Bindung von frei-schwebenden Aerosolen in geschlossenen Räumen mittels Vernebelung durch eine Flüssigkeit, **dadurch gekennzeichnet, dass** die Aerosole durch den aus der Flüssigkeitsvernebelungseinheit verbreiteten Wassernebel an Wassertröpfchen gebunden werden und dadurch schwerkraftbedingt zu Boden fallen.

2. Flüssigkeitsvernebelungseinheit, **dadurch gekennzeichnet, dass** sie als kompakte modulare Flüssigkeitsvernebelungseinheit ausgebildet ist und als integralen Bestandteil einen manuell und/oder automatisch ein- und ausschaltbaren Flüssigkeitsvernebler und als weiteren integralen Bestandteil einen Flüssigkeitstank zur Speisung des Flüssigkeitsverneblers mit Flüssigkeit aufweist oder, alternativ, die benötigte Flüssigkeit jeweils über Leitungen zugeführt wird und dass sie als abnehmbar fixierbare Flüssigkeitsvernebelungseinheit zur abnehmbaren Fixierung in einem Raum ausgebildet ist.

3. Flüssigkeitsvernebler, der so eingerichtet ist, dass er in der Lage ist eine Flüssigkeit, vorzugsweise Wasser, in sich aufzunehmen und diese Flüssigkeit dann als Flüssigkeitsnebel nach außen zu versprühen, wobei diese Flüssigkeitsnebelversprühung manuell und/oder automatisch ein- und ausgeschaltet werden kann, **dadurch gekennzeichnet, dass** der Flüssigkeitsvernebler ferner so eingerichtet und ausgelegt ist, dass er sich zur Verwendung in geschlossenen Räumen eignet.

4. Vorrichtung zur Bindung von freischwebenden Aerosolen in geschlossenen Räumen, wobei die Vorrichtung
- eine stationäre Flüssigkeitsvernebelungseinrichtung mit mindestens einem Flüssigkeitstank und mindestens einer oder mehreren im Raum verteilt angeordneten Flüssigkeitsverneblerdüsen zur Abgabe von Flüssigkeitsnebel in die Umgebungsluft von Räumen sowie
- eine digital vernetzte Sensor- und Steuerungseinrichtung zur Erfassung von freischwebenden Aerosolen oder, alternativ der CO2 Belastung, in geschlossenen Räumen mit vorbestimmbaren Grenzwerten, bei deren Überschreitung die Sensoreinrichtung das Flüssigkeitsvernebelungsmodul veranlasst, eine auf die jeweilige Aerosoldichte im Raum abgestimmte Menge an Flüssigkeit in die Raumluft als feinster Wassernebel auszubringen.

5. Vorrichtung nach Anspruch 4, **dadurch gekennzeichnet, dass** es sich bei dem Raum um eine Halle oder ähnliche für Großveranstaltungen geeignete Räumlichkeit handelt.

6. Vorrichtung nach Anspruch 4, **dadurch gekennzeichnet, dass** es sich bei dem Raum um Stallungen zur landwirtschaftlichen Tierhaltung handelt.

7. Vorrichtung nach Anspruch 4, **dadurch gekennzeichnet, dass** sich bei dem Raum um einen "mobilen Raum" handelt, wie zum Beispiel in einem Flugzeug, einem Bus, einem Zug oder andere

8. Vorrichtung nach Anspruch 4, **dadurch gekennzeichnet, dass** bei größeren Räumen auch zwei oder mehr Flüssigkeitsverneblermodule ebenso wie zwei oder mehr Sensor- und Steuerungseinrichtungen zum Einsatz kommen.

9. Vorrichtung nach Anspruch 4 -8, **dadurch gekennzeichnet, dass** die genannte stationäre Flüssigkeitsvernebelungseinrichtung eine solche ist, bei der die Flüssigkeit
- unter hohem Druck durch Düsen gepresst und auf diese Weise vernebelt wird und/oder
- mittels Ultraschalls vernebelt wird und/oder
- mittels thermischer Einflussnahme vernebelt wird und/oder
- mittels chemischer Einflussnahme vernebelt wird.

10. Vorrichtung nach einem der Ansprüche 4 bis 9, **dadurch gekennzeichnet, dass** die zu vernebelnde Flüssigkeit Wasser ist.

11. Vorrichtung nach Anspruch 3, **dadurch gekennzeichnet, dass** der zu vernebelnden Flüssigkeit Spuren von NatriumChlorid und/oder andere Stoffe wie zum Beispiel NatriumHypoChlorid oder Ozon oder andere Elemente beigemischt werden, die dazu dienen können, Viren oder Bakterien in den Aerosolen abzutöten.

12. Vorrichtung nach Anspruch 2, **dadurch gekennzeichnet, dass** der Flüssigkeitsvernebler so eingerichtet und ausgelegt ist, dass er alternativ auch Feinstaub Aerosole vor Tunnelbahnhöfen in Tunnelanlagen für Schienenfahrzeuge (z.B. U-Bahn/S-Bahn) binden kann, um die vor den in die Bahnhöfe einfahrenden Schienenfahrzeugen in die Tunnelbahnhöfe gedrückten Luftsäulen von deren erheblicher Feinstaubbelastung zu befreien.

13. Vorrichtung nach Anspruch 2 und 12, **dadurch gekennzeichnet, dass** der Flüssigkeitsvernebler durch den erzeugten feinen Wassernebel die Feinstaub-Aerosole sofort aus der Luft an den Tunnelboden bindet und dadurch die gefährliche Verwirbelung in den Luftsäulen ausgeschlossen wird.
